# EUROPÄISCHE PATENTSCHRIFT

(11) **EP 3 676 112 B1**
(45) Veröffentlichungstag und Bekanntmachung des Hinweises auf die Patenterteilung: **20.01.2021**
(21) Anmeldenummer: 18766144.2
(22) Anmeldetag: 24.08.2018
(51) Int. Cl.: B60D 1/36, B60D 1/62, G01B 11/27

(54) **SYSTEM ZUR IDENTIFIKATION EINES ANHÄNGERS UND ZUR UNTERSTÜTZUNG EINES ANKUPPLUNGSPROZESSES AN EINE ZUGMASCHINE**
SYSTEM FOR IDENTIFYING A TRAILER AND FOR ASSISTING A HITCHING PROCESS TO A TRACTOR MACHINE
SYSTÈME D'IDENTIFICATION D'UNE REMORQUE ET D'ASSISTANCE D'UN PROCESSUS D'ACCOUPLEMENT À UN VÉHICULE TRACTEUR

(30) Priorität: 31.08.2017 DE 102017119968
(43) Veröffentlichungstag der Anmeldung: 08.07.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/072867
(87) Internationale Veröffentlichungsnummer: WO 2019/042882

(56) Entgegenhaltungen:
- WO-A1-2009/006529
- WO-A1-2016/065017
- US-A1- 2015 345 939

## Beschreibung

Die vorliegende Erfindung betrifft einen Anhänger mit einem Königszapfen oder mit einer Zugdeichsel zum Ankuppeln einer Zugmaschine auf einer Ankupplungsseite des Anhängers und betrifft eine Zugmaschine zum Ankuppeln an einen Königszapfen oder an einer Zugdeichsel eines Anhängers sowie ein Ankupplungssystem zur Identifikation eines Anhängers und/oder zur Unterstützung eines Ankupplungsprozesses zwischen einem Anhänger und einer Zugmaschine.

Nachdem ein Anhänger manuell, beispielsweise in einem Fuhrpark, aufgefunden wurde, bestimmt üblicherweise ein Fahrer einer Zugmaschine visuell die Ausrichtung des Anhängers und führt das Ankuppeln zwischen dem Anhänger und der Zugmaschine manuell durch. Zum korrekten Auffinden eines Anhängers und Ankuppeln eines Anhängers an eine Zugmaschine bedarf es daher eines gewissen Maßes an Übung bzw. Erfahrung des Fahrers.

Die US 2015/0345939 A1 zeigt ein Lichtsystem für ein Anhängersystem. Dieses Lichtsystem umfasst dabei eine Kupplungswinkeldetektionseinheit.

Die WO 2009/006 529 A1 betrifft ein Verfahren zum Unterstützen eines Fahrers zur Ausrichtung eines Fahrzeugs mit einem Anhänger.

Die WO 2016/065 017 A1 zeigt ein Traktoranhängerkopplungsassistenzsystem umfassend einen Sensor, der an einer Vorderseite oder einer Rückseite des Anhängers montierbar ist.

Die US 2005/0074143 A1 betrifft eine Vorrichtung und eine Methode, um einen Verwender bei einer Rückwärtsfahrt eines Fahrzeugs zu unterstützen. Hierzu weißt die Vorrichtung eine CCD-Kamera auf.

Der vorliegenden Erfindung liegt somit die Aufgabe zugrunde, einen Anhänger bereitzustellen, welcher einfach auffindbar und ankuppelbar ist. Ferner liegt der vorliegenden Erfindung die Aufgabe zugrunde, ein System zur Identifikation und/oder zur Unterstützung eines Ankupplungsprozesses zwischen einem Anhänger und einer Zugmaschine bereitzustellen.

Diese Aufgabe wird gelöst durch einen Anhänger gemäß Anspruch 1 sowie mit einem Ankupplungssystem zur Identifikation eines Anhängers und/oder zur Unterstützung eines Ankupplungsprozesses gemäß Anspruch 8.

Erfindungsgemäß wird ein Anhänger mit einem Königszapfen oder mit einer Zugdeichsel zum Ankuppeln einer Zugmaschine auf einer Ankupplungsseite des Anhängers vorgeschlagen, wobei der Anhänger auf seiner Ankupplungsseite ein detektierbares Muster zur Identifikation des Anhängers und/oder zur Unterstützung des Ankupplungsprozesses aufweist. Bevorzugt umfasst die Ankupplungsseite des Anhängers eine Anbindung zum Königszapfen oder zu der Zugdeichsel des Anhängers. Die Ankupplungsseite des Anhängers ist insbesondere und/oder folglich jene Seite des Anhängers, welche nach einem Ankupplungsprozess mit einer Zugmaschine dieser direkt gegenüberliegt. In anderen Worten kann die Ankupplungsseite daher die Stirnseite des Anhängers sein, welche insbesondere bei einer Geradeausfahrt des Anhängers eine nach außen gerichtete Normale in Fahrtrichtung aufweist. Auf der Ankupplungsseite umfasst der Anhänger ein detektierbares Muster zur Identifikation des Anhängers und/oder zur Unterstützung des Ankupplungsprozesses. Dieses Muster kann beispielsweise auf der Ankupplungsseite als fest vorgegebene Punkte ausgebildet sein, welche von einer Detektionseinheit erfassbar sind. Diese detektierbaren Muster bzw. die fest vorgegebenen Punkte oder ein fest vorgegebener Punkt sind bevorzugt in einem Bereich des Anhängers angeordnet, welcher einfach und zuverlässig scannbar ist. Bevorzugt ist das detektierbare Muster bzw. sind die fest vorgegebenen Punkte des detektierbaren Musters in einem sich vom Erdboden erstreckenden oberen Endbereich und/oder zentral, insbesondere in Breitenrichtung des Anhängers, über dem Königszapfen auf der Ankupplungsseite des Anhängers angeordnet. Das detektierbare Muster weist unter anderem die Vorteile auf, dass der Anhänger eindeutig identifiziert werden kann und die Anordnung des detektierbaren Musters auf der Ankupplungsseite zu einem autarken Ankupplungsprozess beitragen kann. Ferner ist es denkbar, dass die äußeren Abmessungen des Anhängers detektierbar sind. Insbesondere können die erfassten äußeren Abmessungen des Anhängers bei einer Auswertung des detektierbaren Musters verwendet werden, um einen Ankupplungsprozess noch sicherer zu machen.

Bevorzugt weist das detektierbare Muster mindestens einen fest vorgegebenen Punkt, besonders bevorzugt mindestens zwei fest vorgegebene Punkte auf, welcher/welche von einer Detektionseinheit erfassbar ist/sind. Unter einem Punkt in diesem Zusammenhang kann unter anderem Verstanden werden, dass der Punkt einen maximalen Durchmesser von 5 cm bis 15 cm aufweist, denn die Anmelderin hat herausgefunden, dass bei einer solchen Dimensionierung eine besonders sichere Detektierung des Punkts möglich ist. Weiter bevorzugt weisen die fest vorgegebenen Punkte einen Kontrast auf, durch welchen sich die fest vorgegebenen Punkte von der Ankupplungsseite des Anhängers hervorheben. Beispielsweise kann dieser Kontrast dadurch erreicht werden, dass der Punkt aktiv und/oder passiv lichtemittierend ausgebildet ist. Passiv lichtemmitierend ist ein Punkt unter anderem dann, wenn der Punkt eine Licht reflektierende Oberfläche aufweist. Hierdurch kann das detektierbare Muster einfach und zuverlässig mittels einer Detektionseinheit erfasst werden. Bei Erfassung mehrerer fest vorgegebener Punkte können ferner zuverlässig ein Abstand zu dem Anhänger und ein Winkel zu dem Anhänger bestimmt werden. Hierzu steht die Detektionseinheit beispielsweise mit einer Steuereinheit in Kontakt oder ist mit einer solchen verbunden, wobei in der Steuereinheit ein Computerprogramm implementiert ist, mit welchem ein aktueller Abstand und/oder ein aktueller Winkel zwischen dem Anhänger und der Zugmaschine bestimmbar ist.

Zweckmäßigerweise ist zumindest ein Punkt, bevorzugt der überwiegende Teil und besonders stark bevorzugt alle Punkte, aktiv lichtemmitierend ausgebildet. Aktiv lichtemmitierend ist ein Punkt insbesondere dann, wenn dieser beispielsweise eine LED, eine Glühbirne oder eine andere Licht erzeugende Vorrichtung aufweist. Hierdurch kann erreicht werden, dass auch bei Dunkelheit oder bei schlechten Sichtverhältnissen eine sichere Detektierung des Punktes ermöglicht wird.

Bevorzugt sind zumindest zwei Punkte aktiv und/oder passiv lichtemmitierend ausgebildet, wobei die beiden Punkte Licht mit unterschiedlichen Farben emmitieren. Unterschiedliche Farben sind dabei insbesondere dann gegeben, wenn die Wellenlängen des emmitierten Lichts der Punkte zumindest eine Differenz von 50 nm aufweisen. Maßgeblich für die Bestimmung der Wellenlänge ist dabei die Wellenlänge der Hauptfrequenz (Frequenzpeak) des emmitierten Lichtspektrums des Punktes. Durch das Vorsehen von Punkten mit unterschiedlichen Farben kann zum einen die Detektierung vereinfacht und zum anderen kann hierdurch auch die Ausrichtungsbestimmung des Anhängers vereinfacht werden.

Zweckmäßigerweise ist zumindest ein Punkt aktiv lichtemmitierend, wobei das emmitierte Licht dynamischvariabel ist. Dynamischvariabel ist das emmitierte Licht z.B. dann, wenn dieses in einer gewissen Frequenz ein- und ausgeschaltet wird. Alternativ und/oder zusätzlich kann ein emmitiertes Licht beispielsweise auch dann dynamischvariabel sein, wenn eine zyklische Farbänderung des emmitierten Lichts stattfindet. Durch das dynamischvariabel emmitierte Licht kann die Identifikation des Punktes und/oder des Anhängers vereinfacht werden. Zusätzlich oder alternativ kann beispielsweise das dynamischvariabele Licht auch dazu genutzt werden, Informationen betreffend den Anhänger zu übermitteln.
In einer Bevorzugten Ausführungsform weist der aktiv lichtemmitierende Punkt und/oder der Anhänger eine Sensorvorrichtung auf, wobei die eine Sensorvorrichtung unter anderem dazu ausgelegt ist, ein Signal zu empfangen, wobei die Sensorvorrichtung dazu ausgelegt ist, wenn diese das Signal empfängt, ein Steuersignal an den lichtemmitierenden Punkt zu übermitteln, sodass der Punkt von einem nicht-lichtemmitierenden Zustand in einen lichtemmitierenden Zustand überführt wird. In anderen Worten kann dies bedeuten, dass die Sensorvorrichtung dazu dient, beim Empfangen eines Signals den lichtemmitierenden Punkt "einzuschalten". Hierdurch kann sichergestellt werden, dass Energie gespart werden kann. Besonders Bevorzugt ist dabei, nicht nur ein lichtemmitierender Punkt derart gestaltet, sondern alle aktiv lichtemmitierenden Punkte des Anhängers.

Vorteilhafterweise ist das detektierbare Muster in einem vordefinierten Bereich auf der Ankupplungsseite des Anhängers angeordnet, so dass nach einem Erfassen des detektierbaren Musters durch eine Detektionseinheit eine, insbesondere exakte, Position des Königszapfens oder der Zugdeichsel bestimmbar ist. Durch Anordnen des detektierbaren Musters an fest vorgegebenen Positionen in vorgegebenen Bereichen auf der Ankupplungsseite des Anhängers kann eine Ausrichtung und/oder die Position bzw. ein Abstand zu dem Anhänger zuverlässig bestimmt werden, wobei es insbesondere keiner manuellen Unterstützung durch einen Fahrer einer Zugmaschine oder dergleichen bedarf.

Bevorzugt sind die mindestens zwei fest vorgegebenen Punkte des detektierbaren Musters in einem vordefinierten Abstand zueinander und/oder in einem vordefinierten Abstand zu dem Königszapfen oder zu der Zugdeichsel angeordnet. Durch Anordnung der fest vorgegebenen Punkte in einem vordefinierten Abstand kann durch Erfassung der fest vorgegebenen Punkte schnell und einfach ein aktueller Abstand und/oder ein aktueller Winkel zu dem Anhänger bestimmt, insbesondere berechnet, werden. Ferner kann beispielsweise durch die vordefinierte Anordnung der fest vorgegebenen Punkte des Musters eine Zuordnung zu einem Modell oder einer Modellklasse eines Anhängers berücksichtigt werden. Über eine Detektionseinheit können der Abstand und/oder der Winkel zwischen der Detektionseinheit bzw. der Zugmaschine zu der Ankupplungsseite des Anhängers bestimmt werden.

Bevorzugt sind die mindestens zwei fest vorgegebenen Punkte des detektierbaren Musters derart an der Ankupplungsseite des Anhängers angeordnet, daß das Verhältnis des Abstands dieser beiden Punkte zu der Erstreckung der Ankupplungsseite des Anhängers, insbesondere in vertikaler und/oder horizontaler Richtung, zwischen 0,5 bis 0,99, insbesondere zwischen 0,7 bis 0,98 und besonders bevorzugt in einem Bereich von 0,8 bis 0,98 liegt. Hierdurch wird eine besonders genaue Erfassung eines Winkels zwischen Anhänger und Zugmaschine ermöglicht.

Insbesondere ist mindestens ein vorgegebener Punkt in einem Bereich oberhalb des Königszapfens oder - in horizontaler Richtung gesehen - mittig auf der Ankupplungsseite des Anhängers angeordnet, so dass ferner insbesondere dieser mindestens eine vorgegebene Punkt mit den zwei fest vorgegebenen Punkten an dem oberen Endbereich eine Dreieckskonfiguration ausbildet. In diesem Fall weist das detektierbare Muster eine Dreieckskonfiguration auf. Es ist ferner denkbar, dass das detektierbare Muster zwei oder mehr als drei fest vorgegebene Punkte aufweist, so dass die fest vorgegebenen Punkte ein detektierbares Muster mit einer anderen Konfiguration ausbilden. Die fest vorgegebenen Punkte können symmetrisch und/oder asymmetrisch auf der Ankupplungsseite des Anhängers verteilt sein. Es ist ferner denkbar, dass das detektierbare Muster als ein Balkenmuster mit einer vorbestimmten Position und/oder Länge an der Ankupplungsseite des Anhängers angeordnet ist. Insbesondere ist das detektierbare Muster in einem vordefinierten Abstand zu dem Königszapfen angeordnet. Hierdurch kann die Position, insbesondere die Höhe, des Königszapfens durch die Detektion des detektiebaren Musters bestimmt werden. Es ist ferner denkbar, dass eine Konfiguration des Musters einer Anhängerart zugeordnet ist.

Weiter bevorzugt heben sich der mindestens eine und/oder die mindestens zwei fest vorgegebenen Punkte durch einen Kontrast und/oder einer Markierung gegenüber der Ankupplungsseite hervor, so dass der mindestens eine und/oder die mindestens zwei fest vorgegebenen Punkte von dem Detektionseinheit erfassbar sind. Der Kontrast kann beispielsweise als farblicher Kontrast und/oder als Relief ausgebildet sein. Ein solcher Kontrast ist von einer Detektionseinheit erfassbar.

Eine Markierung kann beispielsweise derart ausgebildet sein, dass diese über eine spezielle Optik erfassbar, insbesondere sichtbar, ist. Ferner bevorzugt ist der Bereich des Musters mit einer einen Lotuseffekt bewirkenden Beschichtung beschichtet. Hierdurch wird sichergestellt, dass der Kontrast stets sichtbar ist bzw. bleibt.

Weiter bevorzugt weisen der mindestens eine und/oder die mindestens zwei fest vorgegebenen Punkte einen Nummerncode, einen Barcode, einen Matrixcode, und/oder einen Farbcode und/oder eine in Richtung des Königszapfens oder der Zugdeichsel weisende Markierung auf. Insbesondere sind die festvorgegebene Punkte als ein solcher Code oder als eine solche Markierung ausgebildet. Durch Hinterlegung eines solchen Codes in den fest vorgegebenen Punkten bzw. in dem detektierbaren Muster kann eine Identifikation des Anhängers, insbesondere hinsichtlich des Modells und/oder anderer Daten hinterlegt werden. Es ist beispielsweise denkbar, dass der entsprechende Code und/oder Markierung am Anhänger mit speicherbaren und/oder überschreibbaren Informationen zum Anhänger, insbesondere Informationen zu einem aktuellen Beladungszustand, zum Reifendruck, zu Wartungsintervalle etc., hinterlegt werden kann, wobei diese Informationen von einer Steuereinheit auslesbar sind. Insbesondere sind solche Informationen von einer in einer anzukuppelnden Zugmaschine integrierten Steuereinheit auslesbar und einem Fahrer der Zugmaschine auf einem Monitor anzeigbar. Die Hinterlegung eines Codes hat folglich den Vorteil, dass vor einem Ankupplungsprozess vom Fahrer der Zugmaschine überprüft werden kann, ob die Wahl des anzukuppelnden Anhängers richtig erfolgt ist.

Erfindungsgemäß ist ein Abstand zwischen dem Muster auf der Ankupplungsseite des Anhängers und dem Königszapfen oder der Zugdeichsel in dem Muster hinterlegt, wobei insbesondere der Abstand als ein Farbcode, oder als ein Barcode, oder als ein Matrixcode oder dergleichen hinterlegt ist. Durch Hinterlegung des Abstandes zwischen dem Muster und dem Königszapfen bzw. der Zugdeichsel kann nach Erfassung des Musters abgeschätzt werden, mit welcher Radeinstellung an der Zugmaschine in Abhängigkeit des Abstandes zwischen Zugmaschine und Anhänger eine Ankupplung optimal verläuft.

Weiterhin vorgesehen ist eine Zugmaschine zum Ankuppeln an einen Königszapfen oder an einer Zugdeichsel eines Anhängers, wobei die Zugmaschine zur Identifikation des Anhängers und/oder zur Unterstützung eines Ankupplungsprozesses, insbesondere an einer Ankupplungsseite der Zugmaschine, eine Detektionseinheit zum Erfassen eines detektierbaren Musters, insbesondere an dem Anhänger, aufweist. Die vorgeschlagene Zugmaschine weist eine Detektionseinheit auf, welche dazu ausgebildet ist, ein detektierbares Muster an einem Anhänger zu erfassen. Es ist ferner denkbar, dass die Detektionseinheit mit einer Steuereinheit in Kontakt steht, wobei die Steuereinheit mit der Detektionseinheit verbunden ist oder in der Detektionseinheit integriert ist. Nach Erfassen des detektierbaren Musters kann das detektierbare Muster, insbesondere von der Steuereinheit, ausgewertet werden. Eine solche Auswertung erfolgt hinsichtlich der verschiedenen hierin beschriebenen Aspekte, worauf hiermit Bezug genommen ist.

Gemäß einer weiteren bevorzugten Ausführungsform umfasst die Detektionseinheit ein Kamerasystem und/oder ein Sensorsystem zum Erfassen des detektierbaren Musters eines Anhängers, insbesondere gemäß einem Anhänger wie hierin beschrieben. Bei Verwendung eines Kamerasystems wird eine 2D-Kamera, bevorzugt eine 3D Kamera, eingesetzt. Mit einem Kamerasystem lässt sich das detektierbare Muster visuell erfassen, insbesondere kann mit einem Kamerasystem eine Tiefenschärfe bzw. ein Relief erfasst werden. Beispielsweise könnte auch eine CCD-Kamera eingesetzt werden. Besonders bevorzugt ist es, wenn das Kamerasystem mindestens zwei Kameras, welche horizontal und/oder vertikal zueinander beabstanded sind, aufweist, denn hierdurch kann in besonders einfacher Weise der Abstand zum Muster bestimmt werden. Ferner ist es denkbar alternativ oder zusätzlich ein Sensorsystem einzusetzen, welches auf Basis anderer physikalischer Effekte ein solches detektierbares Muster erfassen kann. Das Sensorsystem könnte Infrarotstrahlung oder Radarwellen oder dergleichen erfassen und/oder emmitieren. Beispielsweise könnte das detektierbare Muster fluorzierend oder dergleichen ausgebildet sein.

Bevorzugt ist die Detektionseinheit dazu ausgebildet, einen Abstand und/oder einen Winkel zu dem detektierbaren Muster des Anhängers zu erfassen, um eine aktuelle Ausrichtung des anzukuppelnden Anhängers und/oder einen Abstand zu dem Anhänger zu bestimmen. Nach dem Erfassen und Auswerten eines aktuellen Winkels und/oder Abstandes zu dem Anhänger kann zur Durchführung eines Ankupplungsprozesses zwischen der Zugmaschine und dem Anhänger die Radeinstellung der Zugmaschine derart gesteuert bzw. verändert werden, dass ein Ankupplungsprozess autark von der Zugmaschine, welche insbesondere selbstfahrend ausgebildet ist, durchführbar ist. Zur Bestimmung des aktuellen Winkels und/oder des aktuellen Abstandes ist in einer Steuereinheit ein Computerprogramm implementiert, welches zur Berechnung bzw. Abschätzung des Winkels und/oder des Abstandes ausgebildet ist. Besonders bevorzugt erfolgt diese Berechnung bzw. die Abschätzung des Winkels und/oder des Abstandes durch ein computerimplementiertes Neuronales-Netz. Die Ausrichtung kann dabei insbesondere durch den Vergleich des erkannten Höhen und/oder Breiten-Verhältnisses des Musters zu dem (bekannten) Höhen- und/oder Breiten-Verhältnis bestimmt werden.

Bevorzugt ist die Detektionseinheit dazu ausgebildet, Anhängerflanken des anzukuppelden Anhängers zu detektieren, um ein räumliches Verhältnis zwischen den Anhängerflanken und/oder zwischen den Anhängerflanken und dem detektierbaren Muster zu bestimmen, so dass eine Ausrichtung des anzukuppelnden Anhängers und/oder ein Abstand zu dem Anhänger bestimmbar ist/sind. Die Anhängerflanken können insbesondere zusätzlich oder auch ausschließlich erfasst werden, wodurch insbesondere die Ausrichtung für einen Ankupplungsprozess des Anhängers bestimmt und mit einer optimalen Ausrichtung verglichen werden kann. Eine optimale Ausrichtung kann beispielsweise in der Steuereinheit gespeichert sein. Bei einer Abweichung zwischen der erfassten und der optimalen Ausrichtung kann die Steuereinheit beispielsweise die Radeinstellungen der Zugmaschine derart beeinflussen, dass in Relation zueinander zwischen dem Anhänger und der Zugmaschine die optimale Ausrichtung bestmöglich erreicht wird, um einen Ankupplungsprozess durchzuführen.

Insbesondere ist eine Höhe des Anhängers von der Erdoberfläche durch die Detektionseinheit ermittelbar. Die erfasste Höhe gibt folglich einer Entfernung zur Erdoberfläche an, wodurch ein Beladungszustand und/oder ein Füllstand einer möglichen Luftfeder des Anhängers abgeschätzt werden kann. Besonders bevorzugt ist die Detektionseinheit ausgebildet, die Höhe des Anhängers - und damit die vertikale Position der Kupplungseinrichtung des Anhängers - zu erfassen, um somit einen problemlosen Kupplungsvorgang zwischen Zugfahrzeug und Anhänger sicherzustellen. Insbesondere kann eine Überladung des Anhängers festgestellt werden, bei welchem ein Ankupplungsprozess zu einer Beschädigung an der Zugmaschine und/oder dem Anhänger führen würde.

Weiter bevorzugt ist die Detektionseinheit, insbesondere das Kamerasystem bzw. eine Kamera des Kamerasystems, ausgebildet, ein Bild mit einer fest vorgegebenen Gesamtanzahl an Pixeln zu erfassen, wobei das detektierbare Muster und/oder die Anhängerflanken in einer Teilanzahl der Gesamtzahl an Pixel erfasst ist und durch Auswertung der Teilanzahl an Pixeln, auf denen das detektierbare Muster und/oder die Anhängerflanken erfasst ist/sind, eine aktuelle Entfernung und/oder ein Winkel zwischen der Detektionseinheit und dem Anhänger ermittelbar ist. Je weniger Pixel das detektierbare Muster erfassen, desto größer ist der Abstand zwischen dem Anhänger und der Zugmaschine. Hingegen, je mehr Pixel das detektierbare Muster erfassen, desto kleiner ist der Abstand zwischen dem Anhänger und der Zugmaschine. Allgemein hängt die Anzahl der Pixel, die das detektierbare Muster erfassen, von dem Abstand zwischen der Detektionseinheit und dem detektierbaren Muster, einer Auflösung der Detektionseinheit, einem Erfassungswinkel der Detektionseinheit, beispielsweise 60°, 90°, 120° oder dergleichen, und/oder einer Kantenlänge des zu erfassenden detektierbaren Musters ab. Ferner weist eine asymmetrische Verteilung der Teilanzahl an Pixeln, welche das Muster erfasst haben, darauf hin, dass der Anhänger und die Zugmaschine einen Winkel zueinander aufweisen. Mit asymmetrischer Verteilung ist vorliegend gemeint, dass beispielsweise in einem Bereich auf der Ankupplungsseite eine Zahl n>0 an Pixeln einen fest vorgegebenen Punkt des Musters erfasst hat, während ein anderer symmetrisch angeordneter fest vorgegebener Punkt des Musters nur durch eine Zahl m>0 an Pixeln erfasst ist, wobei m<n gilt und m, n eine ganze natürlich Zahl ist. Wäre ein Winkel von etwa 90° zwischen einer Erstreckung der Detektionseinheit und der Ankupplungsseite gegeben, so würde m=n sein. Eine Winkelbestimmung durch Pixel erfolgt im Prinzip über eine perspektivische Abbildung. Hierbei errechnet eine Software einen Versatz der Pixel. Dies bedeutet, wird beispielsweise erfasst, dass die Enden einer Kante um 20 Pixel längs und 2 Pixel in der Höhe versetzt sind, so wird diese Kante mit einem Winkel erfasst. Je mehr Pixel ein solcher Versatz umfasst, desto größer ist der Winkel. Wenn beispielsweise der Versatz für eine geradlinig verlaufende Kante in der Höhe gleich Null beträgt, so sind die Detektionseinheit und das detektierbare Muster parallel zueinander ausgerichtet.

Ferner erfindungsgemäß ist ein Ankupplungssystem zur Identifikation eines Anhängers und/oder zur Unterstützung eines Ankupplungsprozesses zwischen einem Anhänger und einer Zugmaschine vorgesehen, umfassend einen Anhänger, wie vorstehend beschrieben, und eine Zugmaschine, wie vorstehend beschrieben, wobei das Ankupplungssystem dazu ausgebildet ist, einen Ankupplungsprozess zwischen dem Anhänger und der Zugmaschine autark, und insbesondere automatisch, durchzuführen. Durch Zusammenwirken eines hierin beschriebenen Anhängers mit einer hierin beschriebenen Zugmaschine wird in vorteilhafter Weise ein Ankupplungssystem offenbart, welches ausgebildet ist, einen anzukuppelnden Anhänger zu identifizieren und/oder eine Ankupplungsprozess zwischen der Zugmaschine und dem Anhänger derart zu unterstützen, dass der Ankupplungsprozess autark, insbesondere ohne Mitwirkung eines Fahrers der Zugmaschine, durchführbar ist. Auf die vorteilhaften Ausführungsformen des Anhängers und die vorteilhaften Ausführungsformen der Zugmaschine wie hierin beschrieben wird Bezug genommen und nicht nochmal an dieser Stelle wiederholt. Es versteht sich, dass das vorgeschlagene Ankupplungssystem mit dem hierin beschrieben Anhänger und der hierin beschriebenen Zugmaschine ausgebildet ist und durch Synergieeffekte zwischen beiden ein vorteilhaftes Ankupplungssystem bereitgestellt wird, mit welchem ein Ankupplungsprozess autark bzw. automatisch durchführbar ist.

Bevorzugt ist der Zugmaschine von dem Anhänger über eine Drahtlosverbindung ein aktueller Abstand zwischen dem Anhänger und der Zugmaschine und/oder eine aktuelle Position übermittelbar, wobei die Zugmaschine dazu ausgebildet ist, aus der aktuellen Position einen Abstand zu dem Anhänger zu ermitteln. Hierzu kann der Anhänger beispielsweise mit einer Anhänger-Steuervorrichtung ausgebildet sein, mit welcher der Anhänger beispielsweise in einem Fuhrpark auffindbar und mit welcher eine aktuelle Position und/oder Ausrichtung des Anhängers bestimmbar ist.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist und sofern dies nicht aufgrund technischer Gegebenheiten oder explizit ausgeschlossen wurde. Es zeigen:
- Figur 1:: eine schematische Ansicht einer Anhänger-Steuervorrichtung, welche mit einer Sendeeinheit und/oder einer Empfangseinheit wechselwirken kann,
- Figur 2:: ein System zum Auffinden und/oder zur Identifikation eines Anhängers mit einer Anhänger-Steuervorrichtung,
- Figur 3:: eine alternative Ausführungsform des Systems gemäß Figur 2,
- Figur 4:: ein System gemäß der Figuren 3 und 2, welches ein Antwortsignal an eine externe Empfangseinheit sendet,
- Figur 5:: einen erfindungsgemäßen Anhänger, insbesondere einen Sattelschlepper, an dem eine Anhänger-Steuervorrichtung montiert und andem ein detektierbares Muster angeordnet ist, und
- Figur 6:: eine schematische Draufsicht auf ein erfindungsgemäßes Ankupplungssystem, welches nach einer Bestimmung der Position und Ausrichtung eines anzukuppelnden Anhängers in einem Fuhrpark für einen Kupplungsprozess nutzbar ist.

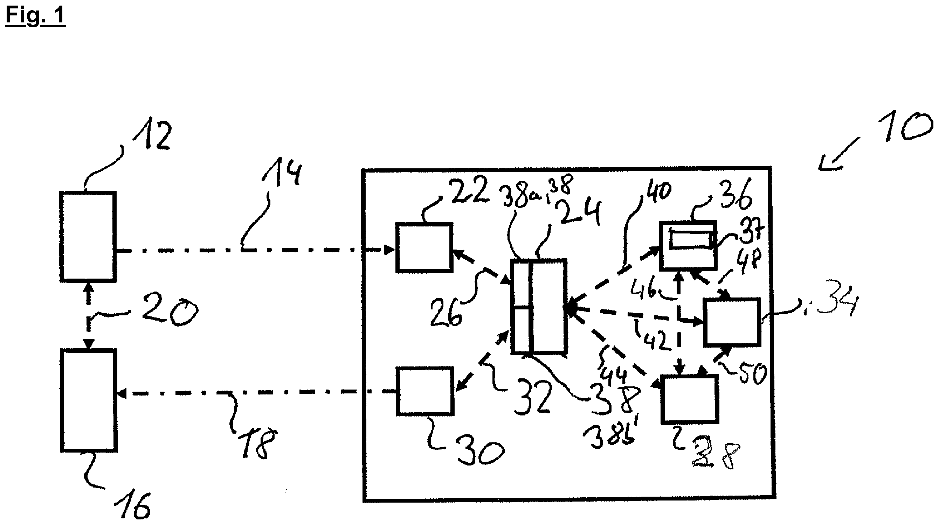

Figur 1 zeigt eine Anhänger-Steuervorrichtung 10, welche mit einer Sendeeinheit 12 kommunizieren kann. Das Kommunizieren zwischen der Sendeeinheit 12 und der Anhänger-Steuervorrichtung 10 ist durch den Pfeil 14 angedeutet. Ferner kann die Anhänger-Steuervorrichtung 10 mit einer Empfangseinheit 16 kommunizieren. Diese Kommunikation ist durch den Pfeil 18 angedeutet. Ferner ist es denkbar, dass die Sendeeinheit 12 und die Empfangseinheit 16 untereinander kommunizieren können, welches durch den Doppelpfeil 20 angedeutet ist. Es ist denkbar, dass die Sendeeinheit 12 und die Empfangseinheit 16 in einer Einheit zusammengefasst sind (nicht dargestellt).

Zum Empfangen eines Signals von der externen Sendeeinheit 12 weist die Anhänger-Steuervorrichtung 10 eine Empfangseinheit 22 auf, welche das empfangene Signal an einen Komparator 24 übergibt. Zwischen der Empfangseinheit 22 und dem Komparator 24 kann es eine Drahtverbindung oder eine Drahtlos-Verbindung geben. Die Kommunikation zwischen dem Komparator 24 und der Empfangseinheit 22 ist in Figur 1 durch den Doppelpfeil 26 dargestellt. Der Komparator 24 ist dazu ausgebildet, das empfangene Signal mit einem vorgegebenen Signal zu vergleichen. Das vorgegebene Signal kann dabei in dem Komparator 24 selbst oder in einer Speichereinheit 28 hinterlegt sein. Der Komparator 24 und die Speichereinheit 28 können miteinander kommunizieren (Doppelpfeil 44).

Wenn das empfangene Signal mit dem vorgegebenen Signal übereinstimmt, übergibt der Komparator 24 ein Antwortsignal an eine Sendeeinheit 30, welches durch den Doppelpfeil 32 indiziert ist. In der Speichereinheit 28 können neben dem vorgegebenen Signal ferner die aktuelle Position und/oder das Antwortsignal oder andere Daten neu eingespeichert werden oder bereits gespeichert sein.

Insbesondere ist die Speichereinheit 28 mit weiteren Einheiten 34, 36, 38 kommunikativ verbunden. Die Kommunikation der Einheiten 24, 28, 34, 36, 38 untereinander sind durch die Doppelpfeile 40, 42, 44, 46, 48, 50 schematisch angezeigt.

Wie in Figur 1 dargestellt, ist die Speichereinheit 28 beispielsweise mit einer Positions-Bestimmungseinheit 36 gekoppelt. Die Positions-Bestimmungseinheit 36 ist insbesondere als eine GPS-Einheit ausgebildet und dient zur Bestimmung einer aktuellen Position der Anhänger-Steuervorrichtung 10. Die Positions-Bestimmungseinheit 36 ist mit dem Komparator 24 und/oder einer Verschlüsselungseinheit 38, 38b oder einer Entschlüsselungseinheit 38, 38a zur Kommunikation verbunden. Insbesondere ist die Entschlüsselungseinheit 38, 38a bzw. die Verschlüsselungseinheit 38, 38b als eine Einheit ausgebildet. Es ist ferner denkbar, dass die Entschlüsselungseinheit 38a und die Verschlüsselungseinheit 38b als zwei unterschiedliche Einheiten ausgebildet sind. Die Verschlüsselungseinheit 38, 38b oder die Entschlüsselungseinheit 38, 38a sind optional.

Wie in Figur 1 dargestellt, kann die Anhänger-Steuervorrichtung 10 eine Energiequelle 34 aufweisen, welche die weiteren Einheiten der Anhänger-Steuervorrichtung mit Energie versorgt. Die Energiequelle 34 kann beispielsweise mit einem Ackumulator ausgebildet sein, welcher sich aufladen kann, wenn ein Anhänger, an dem die Anhänger-Steuervorrichtung 10 montiert ist, an eine Zugmaschine gekoppelt ist.

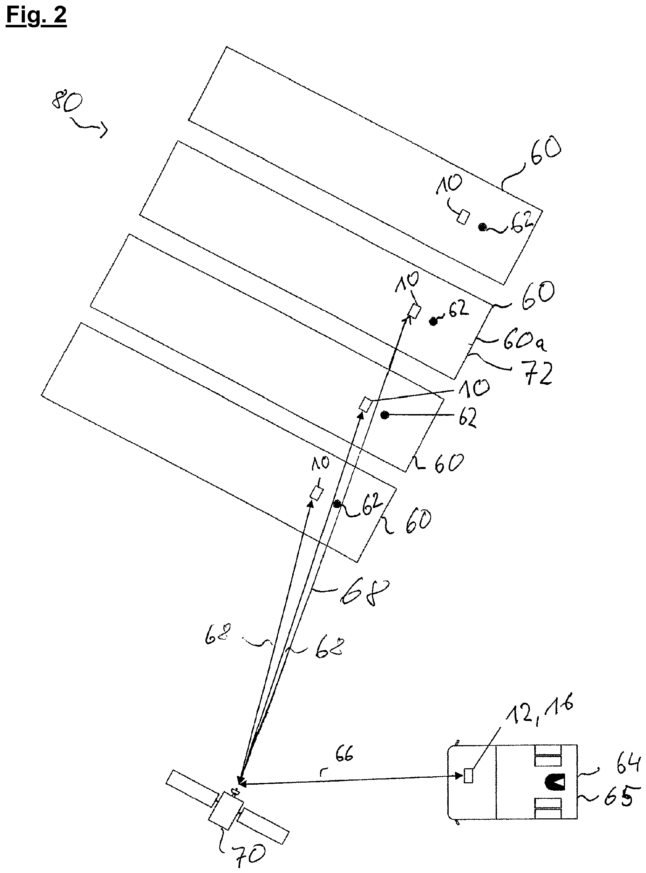

In Zusammenschau der Figuren 2, 3 und 4 werden nachfolgend verschiedene Ausführungsformen eines Systems 80 erläutert. Die Figuren 2, 3 und 4 zeigen jeweils eine Ausführungsform des Systems 80. Insbesondere Figur 2 zeigt, wie eine Zugmaschine 64, welches die externe Sende-Einheit 12 und/oder die externe Empfangseinheit 16 umfasst, ein Signal an eine externe GPS-Einheit 70 übersendet. Die externe GPS-Einheit 70 leitet das Signal an die Anhänger-Steuervorrichtungen 10, welche jeweils an einem Anhänger 60 montiert sind, weiter. Die Signalweiterleitungen sind jeweils durch die Pfeile 66 und 68 in Figur 2 gezeigt. Jeder der Anhänger 60 weist neben der Anhänger-Steuervorrichtung 10 einen Königszapfen 62 auf, an welchem die Zugmaschine 64 ankoppelbar bzw. ankuppelbar ist. Wie in Figur 2 dargestellt, übermittelt die Zugmaschine 64 bzw. die externe Sendeeinheit 12 der Zugmaschine 64 zunächst ein Signal an mehrere Anhänger 60, um die aktuelle Position eines aufzufindenden Anhängers 60a zu ermitteln.

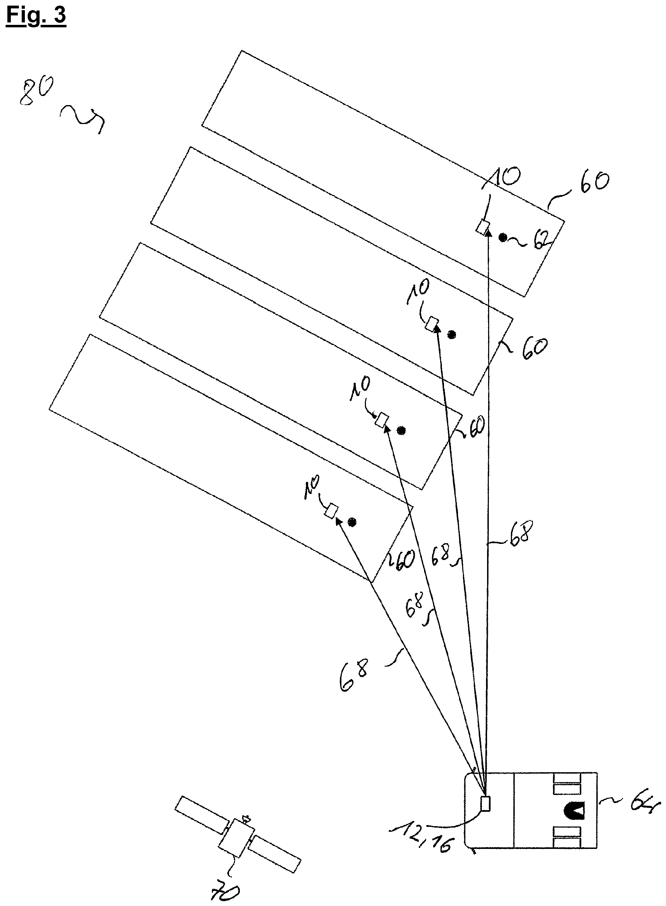

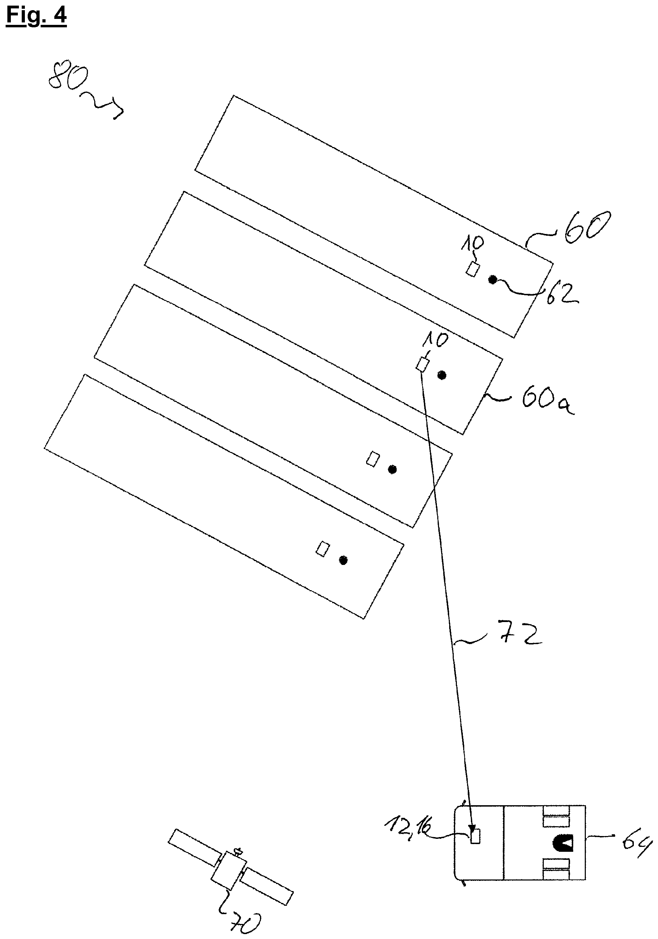

Figur 2 zeigt eine Ausführungsform des Systems, bei dem die Zugmaschine 64 bzw. die ortsfeste Logistikeinheit, das von den Anhängern 60 zu empfangende Signal über eine externe GPS-Einheit 70 an die Anhänger 60 übermittelt. Gemäß der Ausführungsform, welche in Figur 3 dargestellt ist, übersendet die Zugmaschine 64 bzw. die ortsfeste Logistikeinheit das Signal direkt an die Anhänger-Steuervorrichtungen 10 der Anhänger 60. Dies kann beispielsweise auch über lokale Sendemasten erfolgen (nicht dargestellt). Von jedem Anhänger 60 bzw. von jeder Anhänger-Steuervorrichtung 10, welche an einem Anhänger 60 montiert ist, wird das empfangene Signal, wie bereits oben in Bezug auf Figur 1 beschrieben, ausgewertet, d. h. mit einem vorgegebenen Signal verglichen. Bei Übereinstimmung eines vorgegebenen Signals mit dem empfangenen Signal sendet ein Anhänger 60, d. h. der aufzufindende Anhänger 60a, ein Antwortsignal zurück an die Empfangseinheit 16 in der Zugmaschine 64. Bei dem vorgeschlagenen System 80 wird zum Auffinden eines Anhängers 60a aus mehreren Anhängern 60 zunächst ein Abfragesignal an mehrere Anhänger 60 gesandt. Nur bei Übereinstimmung des empfangenen Signals mit einem vorgegebenen Signal, welches vorzugsweise in der Anhänger-Steuervorrichtung 10 hinterlegt ist, sendet der entsprechende Anhänger 60a, welcher aufzufinden ist, ein Antwortsignal zurück an die Zugmaschine 64 bzw. die ortsfeste Logistikeinheit. Durch ein Zurücksenden des Antwortsignals, welches mit dem Bezugszeichen 72 in Figur 4 angedeutet ist, kann der aufzufindende Anhänger 60a identifiziert bzw. aufgefunden werden. Das Auffinden des Anhängers 60a erfolgt insbesondere automatisch. Ein solches Auffinden ist in Figur 4 schematisch dargestellt, wobei ein solches Auffinden sowohl bei einem System gemäß Figur 2 als auch gemäß Figur 3 erfolgt.

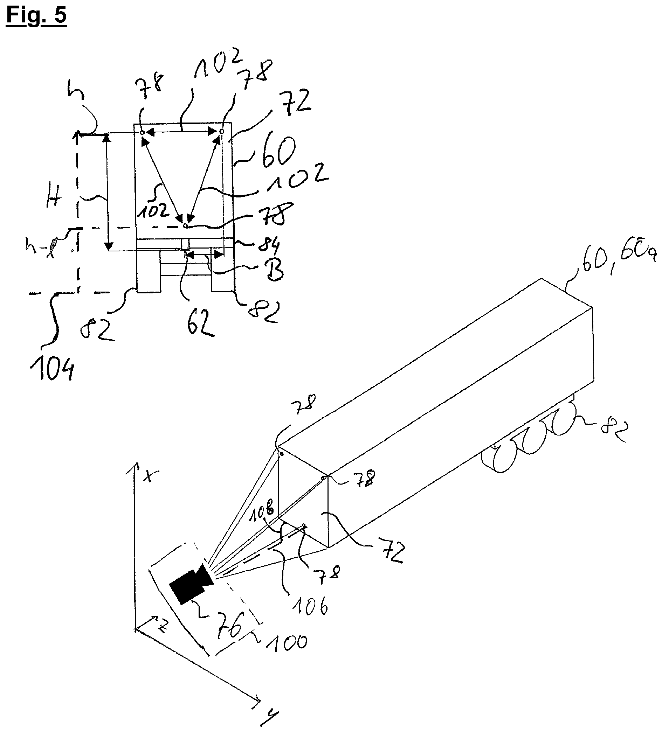

Figur 5 zeigt einen Anhänger 60 bzw. einen aufgefundenen Anhänger 60a, an welchem eine Zugmaschine 64 nach dem Auffinden des Anhängers 60a anzukuppeln ist. Zur Unterstützung des Ankupplungsprozesses zwischen Zugmaschine 64 und Anhänger 60a kann das Antwortsignal insbesondere Ortskoordinaten umfassen, welche ein automatisches Kuppeln zwischen dem Anhänger 60a und der Zugmaschine 64 unterstützt. Nur schematisch dargestellt in Figur 5 ist eine Detektionseinheit 100 in Form eines Kamerasystems 76, welches bevorzugt an der Zugmaschine 64 angeordnet ist (nicht dargestellt). Ein solches Kamerasystem 76 kann den Ankupplungsprozess zwischen der Zugmaschine 64 und dem Anhänger 60, 60a weiter, insbesondere zur visuellen Anzeige für einen Fahrer der Zugmaschine 64, unterstützen bzw. wie hierin vorgeschlagen, kann eine Detektionseinheit 100 dazu dienen, einen Ankupplungsprozess autark, d.h. ohne ein Mitwirken des Fahrers, durchzuführen. Zur Unterstützung des Kupplungsprozesses zwischen dem Anhänger 60a und der Zugmaschine 64 sind an dem Anhänger 60 , 60a fest vorgegebene Punkte 78 angeordnet, welche ein detektierbares Muster 77 bilden und welche von dem Kamerasystem 76 oder der Detektionseinheit 100 erfassbar sind. Die fest vorgegebenen Punkte 78 ermöglichen es, den Königszapfen 62, insbesondere durch Unterstützung eines Fahrers, aufzufinden. Denn eine Höhe H und/oder eine Breite B der vorgegebenen Punkte 78 zu dem Königszapfen 62 des Anhängers sind fest vorgegeben und unabhängig von einer Beladung des Anhängers 62. Die vorgegebenen Punkte 78 sind auf einer Ankupplungsseite 72 des Anhängers 60, 60a angeordnet. Die Ankupplungsseite 72 erstreckt sich in einer x-y-Ebene, wie in Figur 5 dargestellt. Der Anhänger erstreckt sich dann bevorzugt entlang einer z-Achse. Das Auffinden der vorgegebenen Punkte 78 kann einem Fahrer folglich dazu dienen, den Anhänger 62 korrekt anzufahren, und können von dem Kamerasystem 76 erfasst und verwendet werden, um ggf. genötigte Kurzkorrekturen des Zugmaschine anzuzeigen. Insbesondere eine Höhe h kann sich durch eine Beladung des Anhängers 60, 60a oder durch einen aktuellen Reifendruck der Reifen 82 verändern. Daher ist es von Bedeutung, dass die Höhe H von dem Beladungszustand unabhängig ist. Insbesondere gibt ein fester Punkt 78 einen Abstand zwischen dem Königszapfen 62 und einer äußeren Flanke 84 des Anhängers 60, 60a an.

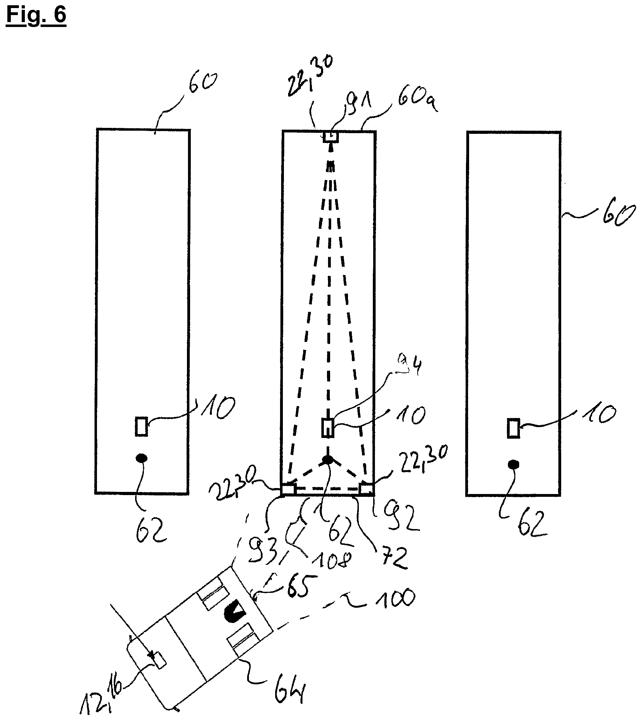

Figur 6 zeigt eine Vielzahl an Anhängern 60, mit jeweils einer Anhänger-Steuervorrichtung 10 und einem Königszapfen 62. Der aufgefunden Anhänger 60a weist ferner ein Ankupplungssystem mit vorgegebene Positionen 91, 92, 93 des aufgefundenen Anhängers 60, 60a auf. Die vorgegebene Positionen 91, 92, 93 des Anhängers 60, 60a können jeweils über eine Sende- und Empfängereinheit erfasst werden. Die erfassten Positionen 91, 92, 93 können dann mittels einer Auswerteeinheit 37, welche in der Anhänger-Steuervorrichtung 10 integriert ist, ausgewertet werden. In der Auswerteeinheit 37 werden beispielsweise Geraden oder Ebenen durch die erfassten Punkte 91, 92 und 93 ermittelt. Es ist ferner denkbar, dass auch die Anhänger-Steuervorrichtung 10 eine erfasste Position 94 darstellt. Die erfassten Positionen 91-94 können dann beispielsweise in Relation zu dem Königszapfen 62 des aufgefundenen Anhängers 60a bestimmt werden. Die Sende- und Empfängereinheit des Anhängers 60, 60a fragt beispielsweise über ein externes GPS-System 70 oder über lokale Sendemasten die aktuelle Position ab, d. h. die Koordinaten des entsprechenden vorgegebenen Punktes 91-94. Mittels der erfassten Punkte 91-94 wird mit einer Software die Position und Ausrichtung des Anhängers 60, 60a, insbesondere in Relation zu dem Königszapfen bestimmt und ggf. in der Speichereinheit 28 hinterlegt. Bevorzugt werden die erforderlichen Positionsdaten mittels Drahtlosverbindung von der Anhänger-Steuereinheit 10 an eine Zugmaschine 64 übertragen, sodass die Zugmaschine 64 den aufgefundenen Anhänger 60a ansteuern kann und eine Kupplung zwischen der Zugmaschine 64 und dem Anhänger 60a durchgeführt werden kann.

Nach einem Auffinden des Anhängers 60a steuert die Zugmaschine 64 den aufgefundenen Anhänger 60a an, um diesen anzukuppeln. Zur Durchführung des Ankupplungsprozesses erfasst die Detektionseinheit 100, welche insbesondere ein Kamerasystem 76 und/oder ein Sensorsystem umfasst und auf einer Ankupplungsseite 65 der Zugmaschine 64 angeordnet ist, das detektierbare Muster 77 auf einer Ankupplungsseite 72 des Anhängers 60, 60a, wobei das detektierbare Muster 77 durch die vorgegebenen Punkte 78 gegeben ist. Die Detektionseinheit 100 kann das detektierbare Muster 77 beispielsweise mittels Ultraschall und/oder optisch oder dergleichen erfassen. Wie in Figur 5 dargestellt sind die vorgegebenen Punkte 78 in einer Dreieckskonfiguration auf der Ankupplungsseite 72 angeordnet, wobei zwei vorgegebene Punkte jeweils an einem oberen äußeren Bereich, oberhalb einer Erdoberfläche 104 in einer Höhe h angeordnet sind und ein fest vorgegebener Punkt 78 oberhalb des Königszapfens 62 in einer Höhe h-l oberhalb der Erdoberfläche 104 angeordnet ist, wobei die Höhe h-l kleiner als die Höhe h ist. Es ist denkbar, dass das detektierbare Muster 77 in einer anderen Konfiguration der fest vorgegebenen Punkte an der Ankupplungsseite 72 angeordnet ist, insbesondere mit einer anderen Anzahl an fest vorgegebenen Punkten. Die Detektionseinheit 100 ist mit einer Steuereinheit, insbesondere per Drahtverbindung oder per Drahtlosverbindung, zum Auswerten des detektierbaren Musters 77 verbunden. Bei einer Auswertung wird, insbesondere mittels Triangulation, eine aktuelle Entfernung 106 und/oder ein aktueller Winkel 108 zwischen dem Anhänger 60, 60a und der Zugmaschine 64 und/oder eine Höhe h des Anhängers 60, 60a bestimmt. Die Auswertung erfolgt bevorzugt auf Basis der Teilanzahl an Pixeln, welche das detektierbare Muster 77 erfasst haben. Sind der aktuelle Winkel 108 und/oder die aktuelle Entfernung 106 für einen optimalen Ankupplungsprozess nicht gegeben, so können beispielsweise Radeinstellungen der Zugmaschine 64 geändert werden, so dass ein Ankupplungsprozess bestmöglich durchführbar ist. Die fest vorgegebenen Punkte 78 sind auf der Ankupplungsseite 72 des Anhängers 60, 60a in einem fest vordefinierten Abstand 102 angeordnet. Ein fest vorgegebener Abstand 102 zwischen zwei fest vorgegebenen Punkten 78 kann ein anderer sein, als ein fest vorgegebener Abstand 102 zwischen zwei anderen fest vorgegebenen Punkten 78, wie dies beispielsweise der Dreieckskonfiguration gemäß Figur 5 zu entnehmen ist.

Die Detektionseinheit 100, insbesondere das Kamerasystem 75, erfasst ein Bild mit einer fest vorgegebenen Gesamtanzahl an Pixeln, wobei das detektierbare Muster 77 und/oder die Anhängerflanken in einer Teilanzahl der Gesamtanzahl an Pixel erfasst ist und durch Auswertung der Teilanzahl an Pixeln, auf denen das detektierbare Muster 77 und/oder die Anhängerflanken erfasst ist/sind, eine aktuelle Entfernung 106 und/oder ein Winkel 108 zwischen der Detektionseinheit 100 und dem Anhänger 60, 60a ermittelbar ist. Insbesondere ist eine Höhe h des Anhängers 60, 60a von der Erdoberfläche 104 durch die Detektionseinheit 100 ermittelbar. Die erfasste Höhe h gibt folglich einer Entfernung zur Erdoberfläche 104 an, wodurch ein Beladungszustand des Anhängers 60, 60a abgeschätzt werden kann. Insbesondere kann durch die Höhenbestimmung h eine Überladung des Anhängers 60, 60a festgestellt werden, bei welchem ein Ankupplungsprozess zu einer Beschädigung an der Zugmaschine 64 und/oder dem Anhänger 60, 60a führen würde. Je weniger Pixel das detektierbare Muster 77 erfassen, desto größer ist die aktuelle Entfernung 106 zwischen dem Anhänger 60, 60a und der Zugmaschine 64. Hingegen, je mehr Pixel das detektierbare Muster 77 erfassen, desto kleiner ist die aktuelle Entfernung 106 zwischen dem Anhänger 60, 60a und der Zugmaschine 64. Ferner weist eine asymmetrische Verteilung der Teilanzahl an Pixeln, welche das detektierbare Muster 77 erfasst haben, darauf hin, dass der Anhänger 60, 60a und die Zugmaschine 64 einen Winkel 108 zueinander aufweisen. Mit asymmetrischer Verteilung ist vorliegend gemeint, dass beispielsweise in einem Bereich auf der Ankupplungsseite 72 eine Zahl n>0 an Pixeln einen fest vorgegebenen Punkt 78 erfasst hat, während ein anderer symmetrisch angeordneter fest vorgegebener Punkt 78 nur durch eine Zahl m>0 an Pixeln erfasst ist, wobei m<n gilt und m, n eine ganze natürlich Zahl ist. Wäre ein Winkel von etwa 90° zwischen einer Erstreckung der Detektionseinheit 100 und der Ankupplungsseite 72 gegeben, so würde m=n sein. Dies ist gleichbedeutend mit einer Erstreckung der Detektionseinheit 100 parallel zur Erstreckung des Anhängers 60, 60a in z-Richtung (siehe Figur 5).

### Bezugszeichenliste:

- 10:: Anhänger-Steuervorrichtung
- 12:: Sendeeinheit
- 14:: Signalübermittlung
- 16:: Empfangseinheit
- 18:: Signalübermittlung
- 20:: Empfangseinheit
- 24:: Komparator
- 26:: Signalübermittlung
- 28:: Speichereinheit
- 30:: Sendeeinheit
- 32:: Signalübermittlung
- 34:: Energiequelle
- 36:: Positions-Bestimmungseinheit
- 37:: Auswerteeinheit
- 38:: Verschlüsselungseinheit/Entschlüsselungseinheit
- 38a:: Entschlüsselungseinheit
- 38b:: Verschlüsselungseinheit
- 40-50:: Signalübermittlung
- 60:: Anhänger
- 62:: Königszapfen
- 64:: Zugmaschine
- 65:: Ankupplungsseite der Zugmaschine
- 66:: Signalübermittlung
- 68:: Signalübermittlung
- 70:: Externe GPS-Einheit
- 72:: Ankupplungsseite des Anhängers
- 76:: Kamerasystem
- 77: detektierbares Muster
- 78:: fester Punkt
- 80:: System
- 82:: Reifen
- 84:: Flanke
- 91-94:: vorgegebene Position bzw. vorgegebener Bereich
- 100:: Detektionseinheit
- 102:: vordefinierter Abstand
- 104: Erdoberfläche
- 106: aktuelle Entfernung
- 108: Winkel

- H:: Höhe
- B:: Breite
- h:: Höhe zur Erdoberfläche
- h-l:: Höhe zur Erdoberfläche, wobei h-l<h

## Patentansprüche

1. Anhänger (60, 60a) mit einem Königszapfen (62) oder mit einer Zugdeichsel zum Ankuppeln einer Zugmaschine (64) auf einer Ankupplungsseite (72) des Anhängers (60, 60a), wobei der Anhänger (60, 60a) auf seiner Ankupplungsseite (72) ein detektierbares Muster (77) zur Identifikation des Anhängers aufweist,
**dadurch gekennzeichnet, dass** ein vordefinierter Abstand (102) zwischen dem detektierbaren Muster (77) der Ankupplungsseite (72) des Anhängers (60, 60a) und dem Königszapfen (62) oder der Zugdeichsel in dem Muster (77) hinterlegt ist, wobei insbesondere der vordefinierte Abstand (102) in einem Farbcode, oder einem Barcode, oder einem Matrixcode oder dergleichen hinterlegt ist.

2. Anhänger (60, 60a) nach Anspruch 1, wobei das detektierbare Muster (77) mindestens einen fest vorgegebenen Punkt (78), bevorzugt mindestens zwei fest vorgegebene Punkte (78) umfasst, welcher/welche von einer Detektionseinheit (100) erfassbar ist/sind.

3. Anhänger (60, 60a) gemäß Anspruch 2, wobei zumindest ein Punkt (78), bevorzugt der überwiegende Teil und besonders stark bevorzugt alle Punkte (78), aktiv lichtemmitierend ausgebildet ist/sind.

4. Anhänger gemäß einem der Ansprüche 2 oder 3, wobei zumindest zwei Punkte (78) aktiv und/oder passiv lichtemmitierend ausgebildet sind, wobei die beiden Punkte (78) Licht mit unterschiedlichen Farben emmitieren.

5. Anhänger (60, 60a) gemäß einem der Ansprüche 2 bis 4, wobei zumindest ein Punkt (78) aktiv lichtemmitierend ist, wobei das emmitierte Licht dynamischvariabel ist.

6. Anhänger (60, 60a) nach einem der vorhergehenden Ansprüche, wobei das detektierbare Muster (77) in einem vordefinierten Bereich auf der Ankupplungsseite (72) des Anhängers (60, 60a) angeordnet ist, so dass nach einem Erfassen des detektierbaren Musters (77) durch eine Detektionseinheit (100) eine, insbesondere exakte, Position des Königszapfens (62) oder der Zugdeichsel bestimmbar ist.

7. Anhänger (60, 60a) nach einem der vorhergehenden Ansprüche, wobei die mindestens zwei fest vorgegebenen Punkte (78) des detektierbaren Musters (77) derart an der Ankupplungsseite (72) des Anhängers angeordnet sind, daß das Verhältnis des Abstands dieser beiden Punkte (78) zu der Erstreckung der Ankupplungsseite (72) des Anhängers, insbesondere in vertikaler und/oder horizontaler Richtung, zwischen 0,5 bis 0,99, insbesondere zwischen 0,8 bis 0,98 liegt, und/oder
wobei zwei fest vorgegebene Punkte (78) an einem oberen, sich in einer Höhe H von einer Erdoberfläche (104) erstreckenden äußeren Endbereich der Ankupplungsseite (72) des Anhängers angeordnet sind, wobei insbesondere mindestens ein vorgegebener Punkt (78) in einem Bereich oberhalb des Königszapfens (62) auf der Ankupplungsseite (72) des Anhängers (60) angeordnet ist, so dass insbesondere der mindestens eine vorgegebene Punkt (78) mit den zwei fest vorgegebenen Punkten (78) an dem oberen Endbereich eine Dreieckskonfiguration ausbildet.

8. Ankupplungssystem zur Identifikation eines Anhängers (60,60a) und/oder zur Unterstützung eines Ankupplungsprozesses zwischen einem Anhänger (60, 60a) und einer Zugmaschine (64), umfassend
einen Anhänger (60, 60a) nach einem der Ansprüche 1 bis 7, und
eine Zugmaschine (64) zum Ankuppeln an einem Königszapfen (62) oder einer Zugdeichsel des Anhängers (60, 60a),
wobei die Zugmaschine (64) zu Identifikation eines Anhängers (60, 60a), insbesondere an einer Ankupplungsseite (65) der Zugmaschine (64), eine Detektionseinheit (100) zum Erfassen eines detektierbaren Musters (77) aufweist,
wobei das Ankupplungssystem dazu ausgebildet ist, einen Ankupplungsprozess zwischen dem Anhänger (60, 60a) und der Zugmaschine (64) autark, und insbesondere automatisch, durchzuführen.

9. Ankupplungssystem nach Anspruch 8,
wobei die Detektionseinheit (100) ein Kamerasystem (76) und/oder ein Sensorsystem zum Erfassen des detektierbaren Musters (77) des Anhängers (60, 60a), insbesondere nach einem der Ansprüche 1 bis 5, umfasst.

10. Ankupplungssystem nach Anspruch 8 oder 9, wobei die Detektionseinheit (100) dazu ausgebildet ist, einen Abstand und/oder einen Winkel zu dem detektierbaren Muster (77) des Anhängers (60, 60a) zu erfassen, um eine aktuelle Ausrichtung des anzukuppelnden Anhängers (60, 60a) und/oder einen Abstand zu dem Anhänger (60, 60a) zu bestimmen.

11. Ankupplungssystem nach einem der Ansprüche 8 bis 10, wobei die Detektionseinheit (100) dazu ausgebildet ist, Anhängerflanken des anzukuppelden Anhängers (60, 60a) zu detektieren, um ein räumliches Verhältnis zwischen den Anhängerflanken und/oder zwischen den Anhängerflanken und dem detektierbaren Muster (77) zu bestimmen, so dass eine Ausrichtung des anzukuppelnden Anhängers (60, 60a) und/oder eine Abstand zu dem Anhänger bestimmbar ist/sind.

12. Ankupplungssystem nach einem der Ansprüche 8 bis 10, wobei die Detektionseinheit (100), insbesondere das Kamerasystem (76), ein Bild mit einer fest vorgegebenen Gesamtanzahl an Pixeln detektiert, wobei das detektierbare Muster (77) und/oder die Anhängerflanken in einer Teilanzahl der Gesamtanzahl an Pixeln erfasst und durch Auswertung der Teilanzahl an Pixeln, auf denen das detektierbare Muster (77) und/oder die Anhängerflanken erfasst sind, eine aktuelle Entfernung (106) und/oder ein Winkel (108) zwischen der Detektionseinheit (100) und dem Anhänger (60, 60a) ermittelbar ist, wobei insbesondere eine Höhe (h) des Anhängers (60, 60a) oder des Königszapfens (62) von der Erdoberfläche (104) oder relativ zur Detektionseinheit (100) durch die Detektionseinheit (100) ermittelbar ist.

## Claims

1. A trailer (60, 60a) having a kingpin (62) or having a drawbar for coupling a tractor unit (64) on a coupling side (72) of the trailer (60, 60a), wherein the trailer (60, 60a) has, on its coupling side (72), a detectable pattern (77) for identifying the trailer,
**characterised in that** a predefined distance (102) between the detectable pattern (77) of the coupling side (72) of the trailer (60, 60a) and the kingpin (62) or the drawbar is stored in the pattern (77), wherein, in particular, the predefined distance (102) is stored in a color code or a barcode or a matrix code or the like.

2. The trailer (60, 60a) as claimed in claim 1, wherein the detectable pattern (77) comprises at least one permanently predefined point (78), preferably at least two permanently predefined points (78) which can be detected by a detection unit (100).

3. The trailer (60, 60a) as claimed in claim 2, wherein at least one point (78), preferably most and particularly highly preferably all the points (78) is/are embodied in an actively light-emitting fashion.

4. The trailer as claimed in one of claims 2 and 3, when at least two points (78) are embodied in an actively and/or passively light-emitting fashion, wherein the two points (78) emit light in different colours.

5. The trailer (60, 60a) as claimed in one of claims 2 to 4, wherein at least one point (78) is actively light-emitting, wherein the emitted light is dynamically variable.

6. The trailer (60, 60a) as claimed in one of the preceding claims, wherein the detectable pattern (77) is arranged in a predefined region on the coupling side (72) of the trailer (60, 60a), so that after the detectable pattern (77) has been detected by a detection unit (100) it is possible to determine an, in particular exact, position of the kingpin (62) or of the drawbar.

7. The trailer (60, 60a) as claimed in one of the preceding claims, wherein the at least two permanently predefined points (78) of the detectable pattern (77) are arranged on the coupling side (72) of the trailer in such a way that the ratio between the distance between these two points (78) and the extent of the coupling side (72) of the trailer, in particular in the vertical and/or horizontal directions is between 0.5 and 0.99, in in particular between 0.8 and 0.98, and/or
wherein two permanently predefined points (78) are arranged on an upper outer end region, extending at a height H from the surface (104) of the Earth, of the coupling side (72) of the trailer, wherein, in particular, at least one predefined point (78) is arranged in a region above the kingpin (62) on the coupling side (72) of the trailer (60), so that, in particular, the at least one predefined point (70) forms a triangular configuration with the two permanently predefined points (78) on the upper end region.

8. A coupling system for identifying a trailer (60, 60a) and/or for assisting a coupling process between a trailer (60, 60a) and a tractor unit (64), comprising a trailer (60, 60a) as claimed in one of claims 1 to 7, and
a tractor unit (64) for coupling to a kingpin (62) or a drawbar of the trailer (60, 60a),
wherein the tractor unit (64) has, for identifying a trailer (60, 60a), in particular on a coupling side (65) of the tractor unit (64), a detection unit (100) for detecting a detectable pattern (77),
wherein the coupling system is designed to carry out a coupling process between the trailer (60, 60a) and the tractor unit (64) autarkically, and in particular automatically.

9. The coupling system as claimed in claim 8,
wherein the detection unit (100) comprises a camera system (76) and/or a sensor system for detecting the detectable pattern (77) of the trailer (60, 60a), in particular as claimed in one of claims 1 to 5.

10. The coupling system as claimed in one of claims 8 and 9, wherein the detection unit (100) is designed to detect a distance and/or an angle with respect to the detectable pattern (77) of the trailer (60, 60a) in order to determine a current alignment of the trailer (60, 60a) to be coupled and/or a distance from the trailer (60, 60a).

11. The coupling system as claimed in one of claims 8 to 10, wherein the detection unit (100) is designed to detect trailer edges of the trailer (60, 60a) to be coupled, in order to determine a spatial ratio between the trailer edges and/or between the trailer edges and the detectable pattern (77), so that an alignment of the trailer (60, 60a) to be coupled and/or a distance from the trailer can be determined.

12. The coupling system as claimed in one of claims 8 to 10, wherein the detection unit (100), in particular the camera system (76) detects an image with a permanently predefined total number of pixels, wherein the detectable pattern (77) and/or the trailer edges are detected in a subset of the total number of pixels, and by evaluating the subset of pixels at which the detectable pattern (77) and/or the trailer edges are detected it is possible to acquire a current distance (106) and/or an angle (108) between the detection unit (100) and the trailer (60, 60a), wherein, in particular, a height (h) of the trailer (60, 60a) or of the kingpin (62) from the surface (104) of the Earth or a height (h) with respect to the detection unit (100) can be acquired by the detection unit (100).

## Revendications

1. Remorque (60, 60a) comportant un pivot d'attelage (62) ou un timon pour l'attelage d'un véhicule tracteur (64) sur un côté attelage (72) de la remorque (60, 60a), la remorque (60, 60a) présentant sur son côté attelage (72) un motif détectable (77) pour identifier la remorque,
**caractérisée en ce que**
une distance prédéfinie (102) entre le motif détectable (77) du côté attelage (72) de la remorque (60, 60a) et le pivot d'attelage (62) ou le timon est mémorisée dans le motif (77), et
en particulier la distance prédéfinie (102) est mémorisée dans un code couleur ou dans un code à barres ou dans un code matriciel ou similaire.

2. Remorque (60, 60a) selon la revendication 1,
dans laquelle
le motif détectable (77) comprend au moins un point (78) prédéterminé de manière fixe, de préférence au moins deux points (78) prédéterminés de manière fixe, qui est/sont détectable(s) par une unité de détection (100).

3. Remorque (60, 60a) selon la revendication 2,
dans laquelle
au moins un point (78), de préférence la majeure partie et de manière particulièrement préférée tous les points (78), est/sont réalisé(s) de manière à émettre activement de la lumière.

4. Remorque selon l'une des revendications 2 ou 3,
dans laquelle
au moins deux points (78) sont réalisés de manière à émettre activement et/ou passivement de la lumière, les deux points (78) émettant de la lumière de couleurs différentes.

5. Remorque (60, 60a) selon l'une des revendications 2 à 4,
dans laquelle
au moins un point (78) est activement émetteur de lumière, la lumière émise étant dynamiquement variable.

6. Remorque (60, 60a) selon l'une des revendications précédentes,
dans laquelle
le motif détectable (77) est disposé dans une zone prédéfinie sur le côté attelage (72) de la remorque (60, 60a), de sorte qu'après une détection du motif détectable (77) par une unité de détection (100), une position, en particulier exacte, du pivot d'attelage (62) ou du timon peut être déterminée.

7. Remorque (60, 60a) selon l'une des revendications précédentes,
dans laquelle
lesdits au moins deux points (78) prédéterminés de manière fixe du motif détectable (77) sont disposés sur le côté attelage (72) de la remorque de telle sorte que le rapport de la distance de ces deux points (78) sur l'extension du côté attelage (72) de la remorque, en particulier dans la direction verticale et/ou horizontale, soit compris entre 0,5 et 0,99, en particulier entre 0,8 et 0,98, et/ou
deux points (78) prédéterminés de manière fixe sont disposés dans une zone d'extrémité extérieure supérieure du côté attelage (72) de la remorque (60) s'étendant à une hauteur H par rapport à une surface du sol (104), et en particulier au moins un point (78) prédéterminé est disposé dans une zone au-dessus du pivot d'attelage (62) sur le côté attelage (72) de la remorque (60), de sorte qu'en particulier ledit au moins un point (78) prédéterminé forme une configuration triangulaire avec les deux points (78) prédéterminés de manière fixe dans la zone d'extrémité supérieure.

8. Système d'attelage pour identifier une remorque (60, 60a) et/ou pour soutenir un processus d'attelage entre une remorque (60, 60a) et un véhicule tracteur (64), comprenant
une remorque (60, 60a) selon l'une des revendications 1 à 7, et
un véhicule tracteur (64) pour l'attelage à un pivot d'attelage (62) ou à un timon de la remorque (60, 60a),
le véhicule tracteur (64) présentant une unité de détection (100) destinée à détecter un motif détectable (77) pour l'identification d'une remorque (60, 60a), en particulier sur un côté attelage (65) du véhicule tracteur (64),
le système d'attelage étant réalisé pour effectuer un processus d'attelage entre la remorque (60, 60a) et le véhicule tracteur (64) de manière autonome, et en particulier de manière automatique.

9. Système d'attelage selon la revendication 8,
dans lequel
l'unité de détection (100) comprend un système de caméra (76) et/ou un système de capteur pour détecter le motif détectable (77) de la remorque (60, 60a), en particulier selon l'une des revendications 1 à 5.

10. Système d'attelage selon la revendication 8 ou 9,
dans lequel
l'unité de détection (100) est réalisée pour détecter une distance et/ou un angle par rapport au motif détectable (77) de la remorque (60, 60a), afin de déterminer une orientation actuelle de la remorque (60, 60a) à atteler et/ou une distance par rapport à la remorque (60, 60a).

11. Système d'attelage selon l'une des revendications 8 à 10,
dans lequel
l'unité de détection (100) est réalisée pour détecter les flancs de la remorque (60, 60a) à atteler, afin de déterminer une relation spatiale entre les flancs de la remorque et/ou entre les flancs de la remorque et le motif détectable (77), de manière à pouvoir déterminer une orientation de la remorque (60, 60a) à atteler et/ou une distance par rapport à la remorque.

12. Système d'attelage selon l'une des revendications 8 à 10,
dans lequel
l'unité de détection (100), en particulier le système de caméra (76), détecte une image avec un nombre total de pixels prédéterminé de manière fixe,
le motif détectable (77) et/ou les flancs de la remorque sont détectés dans un nombre partiel du nombre total de pixels, et
par l'évaluation du nombre partiel de pixels, sur lequel le motif détectable (77) et/ou les flancs de la remorque sont détectés, une distance actuelle (106) et/ou un angle (108) entre l'unité de détection (100) et la remorque (60, 60a) peuvent être déterminés,
en particulier une hauteur (h) de la remorque (60, 60a) ou du pivot d'attelage (62) par rapport à la surface du sol (104) ou par rapport à l'unité de détection (100) peut être déterminée par l'unité de détection (100).
